# FASCICULE DE BREVET EUROPEEN

(11) **EP 2 941 157 B1**
(45) Date de publication et mention de la délivrance du brevet: **02.05.2018**
(21) Numéro de dépôt: 14701808.9
(22) Date de dépôt: 06.01.2014
(51) Int. Cl.: A47J 31/36

(54) **DISTRIBUTEUR AUTOMATIQUE DE BOISSON INFUSÉE À PARTIR D'UNE MOUTURE**
VERKAUFSAUTOMAT FÜR DURCH MAHLEN INFUNDIERTE GETRÄNKE
AUTOMATIC DISPENSER FOR BEVERAGES INFUSED USING GROUNDS

(30) Priorité: 07.01.2013 FR 1350118
(43) Date de publication de la demande: 11.11.2015
(73) Titulaire: SEB S.A., 69130 Ecully (FR)
(72) Inventeur: BICHET, Fabrice, 53100 Mayenne (FR); REVEILLERE, Fabrice, 53100 Mayenne (FR); BEAUDET, Olivier, 61140 Geneslay (FR)
(74) Mandataire: Bourrières, Patrice
(86) Numéro de dépôt international: PCT/FR2014/050006
(87) Numéro de publication internationale: WO 2014/106722

(56) Documents cités:
- EP-A1- 0 608 804
- GB-A- 2 008 394
- US-A- 3 086 446
- US-A1- 2011 212 236

## Description

L'invention concerne un distributeur automatique de boisson infusée à partir de mouture, par exemple une machine à café automatique apte à réaliser un café expresso à partir de café moulu.
Un distributeur automatique de boisson infusée comprend généralement un réservoir d'eau froide, un bloc de chauffe, une chambre d'infusion et un distributeur de mouture. Le bloc d'infusion comprend une chambre d'infusion ménageant un débouché supérieur, une tête de tassage et un organe d'éjection. Un cycle de préparation de café débute par l'introduction de mouture de café dans la chambre d'infusion, par son débouché supérieur, depuis le distributeur de mouture, via un conduit d'amenée. Ensuite, la tête de tassage est descendue verticalement de sa position initiale de repos (au-dessus de la chambre d'infusion) à une position de tassage, à l'intérieur de la chambre d'infusion, dans laquelle elle comprime la mouture. La chambre d'infusion est alors alimentée en eau chaude sous pression par le bloc de chauffe. Le café fabriqué est conduit vers un récipient récepteur. Une fois le café réalisé, la tête de tassage et la galette de marc (c'est-à-dire la galette de café infusé et tassé) remontent verticalement. Dès que la galette arrive au niveau du débouché de la chambre d'infusion, un organe d'éjection balaie la galette de marc, par un mouvement rapide, vers un bac de récupération. La mouture déversée dans la chambre d'infusion en début de cycle de café n'est généralement pas uniformément répartie. Il en résulte un tassage non uniforme de la mouture, ce qui a une incidence sur la qualité de l'extraction du goût et des saveurs du café. On connait du document US2011212236 une telle machine. Le but de la présente invention est d'améliorer la situation.
A cet effet, l'invention concerne un distributeur automatique de boisson infusée à partir d'une mouture comprenant :
- une chambre d'infusion présentant un débouché d'introduction de la mouture ;
- un conduit d'amenée de la mouture jusqu'au débouché de la chambre d'infusion ;
- une tête de tassage mobile entre une position de repos et une position de tassage à l'intérieur de la chambre ;
le conduit d'amenée est prolongé par une partie d'extrémité mobile entre une position de repos dans laquelle la partie d'extrémité prolonge le conduit d'amenée jusqu'au-dessus du débouché de la chambre d'infusion et une position effacée dans laquelle le dessus du débouché de la chambre d'infusion est dégagé pour le passage de la tête de tassage, caractérisé en ce que, la partie d'extrémité est réalisée en un matériau souple et élastique, par exemple en matière plastique, en métal ou en élastomère, apte à être courbé sans se rompre sous l'action d'une force et à retrouver sa forme initiale au repos. Grâce à l'invention, la mouture est déversée plus loin vers le centre de la chambre d'infusion. La répartition de la mouture dans la chambre est ainsi améliorée. Cela permet, d'une part, d'augmenter la quantité de mouture pouvant être introduite dans la chambre et, d'autre part, de produire une meilleure infusion, ou percolation, grâce à un tassage plus uniforme de la mouture. Au final, le distributeur offre une meilleure extraction du goût et des saveurs.
De surcroît, l'ajout d'une partie d'extrémité effaçable au conduit d'amenée, jouant un rôle de rallonge en position déployée de repos, permet de garantir une meilleure répartition de la mouture déversée dans la chambre d'infusion, avec un encombrement réduit, notamment par rapport à une solution utilisant un conduit d'amenée intégralement mobile.
Avantageusement, en position de repos, ladite partie d'extrémité comprend un bord d'extrémité libre s'étendant sensiblement au-dessus du centre de la chambre. Ainsi, la mouture est déversée sensiblement au centre de la chambre d'infusion.
Dans une forme de réalisation particulière, la partie d'extrémité est agencée pour passer de sa position de repos à sa position effacée par flexion sous l'action d'une force de poussée.
Dans ce cas, et avantageusement, la partie d'extrémité est agencée pour revenir en position de repos après relâchement de la force de poussée.
Avantageusement encore, la partie d'extrémité est agencée pour revenir en position de repos par rappel élastique.
La partie d'extrémité prolongeant le conduit d'amenée en position de repos peut être flexible et élastique de manière à être effacée par simple flexion sous l'action d'une force de poussée et à reprendre sa forme et sa position de repos initiales, par rappel élastique, après relâchement de la force de poussée. La conception d'une telle solution est simple. En outre, le relâchement de la partie d'extrémité et son retour en position de repos par effet ressort, permet un auto-nettoyage par décollement de la mouture. Avantageusement, le distributeur comprend un organe d'éjection d'une galette de mouture en fin de cycle de préparation d'une infusion et ledit organe d'éjection est agencé pour exercer une force de poussée sur la partie d'extrémité du conduit afin de l'effacer.
L'organe d'éjection a ainsi un double rôle : il assure non seulement l'évacuation de la galette de marc en fin de cycle d'infusion mais exerce également une force de poussée sur la partie d'extrémité du conduit pour l'effacer, autrement dit pour la faire passer de sa position de repos à sa position effacée.
Avantageusement encore, ledit organe d'éjection étant animé d'un mouvement alternatif d'aller et de retour entre une position de repos et une position d'éjection, il est agencé pour exercer une force de poussée sur la partie d'extrémité lors de son mouvement aller de la position de repos à la position d'éjection et pour relâcher la partie d'extrémité lors de son mouvement retour de la position d'éjection à la position de repos.

Avantageusement, la partie d'extrémité est fixée sous le conduit d'amenée.

Avantageusement encore la partie d'extrémité est fixée par l'une des techniques du groupe comprenant soudure par ultra-son, vissage, coincement et collage.

De préférence, la partie d'extrémité est agencée pour être placée sous le conduit d'amenée en position effacée.

Avantageusement la partie d'extrémité est réalisée dans l'un des matériaux du groupe comprenant une matière plastique, un métal et un élastomère.

Avantageusement, la partie d'extrémité a une forme de languette.

De préférence l'organe d'éjection est mobile en rotation autour d'un axe vertical. L'invention concerne également une machine automatique à café intégrant un distributeur selon les caractéristiques précédentes. Un procédé d'infusion d'une boisson à partir d'une mouture à l'aide d'un distributeur automatique, comprend :
- une étape de déversement de la mouture dans une chambre d'infusion à travers un débouché d'introduction, par un conduit d'amenée;
- une étape d'infusion et de tassage de la mouture à l'aide d'une tête de tassage déplacée d'une position de repos à une position de tassage à l'intérieur de la chambre ;
caractérisé en ce que :
- lors de l'étape de déversement, la mouture est amenée au-dessus du débouché de la chambre par une partie d'extrémité libre en position de repos et prolongeant le conduit d'amenée, et
- lors de l'étape d'infusion et de tassage, ladite partie d'extrémité libre est déplacée dans une position effacée dans laquelle le dessus du débouché de la chambre est dégagé pour le passage de la tête de tassage.
L'invention sera mieux comprise à l'aide de la description suivante d'une forme de réalisation particulière d'un distributeur de boisson infusée, selon l'invention, en référence aux dessins annexés sur lesquels :
- La figure 1 représente une vue en perspective du distributeur, selon la forme de réalisation particulière de l'invention, certains éléments du distributeur n'étant pas représentés pour des raisons de clarté ;
- La figure 2 représente une vue en perspective d'une partie du distributeur de la figure 1 comportant un bloc broyeur et une chambre d'infusion dans un plan de coupe passant par l'axe de symétrie de la chambre d'infusion ;
- Les figures 3A et 3B représentent respectivement une vue arrière en perspective et une vue avant en perspective d'un dispositif d'amenée de mouture du bloc broyeur au bloc infusion ;
- La figure 4 représente une vue en perspective d'une partie d'extrémité du dispositif d'amenée, en position fléchie.

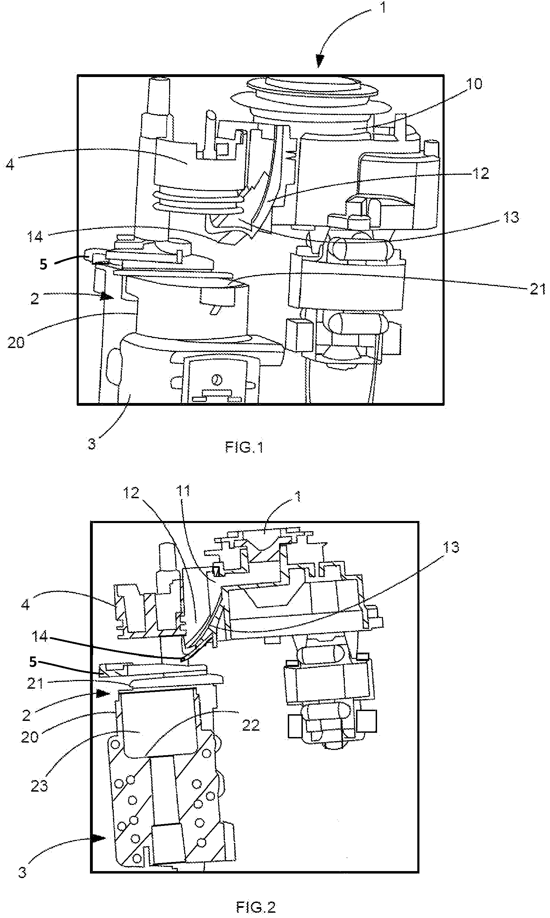

Sur la figure 1, on a représenté un distributeur automatique de boisson infusée. Dans l'exemple particulier décrit ici, ce distributeur est intégré dans une machine automatique à café apte à réaliser un café de type expresso à partir de mouture de café. En variante, le distributeur pourrait réaliser tout autre type de boisson infusée, à partir d'une mouture, ou d'un produit à déverser, par exemple du thé.
D'emblée on notera que, par souci de clarté, seuls les éléments du distributeur nécessaires à la compréhension de l'invention seront décrits.
La machine à café comprend, à l'intérieur d'un boîtier non représenté, un distributeur de mouture 1, une chambre d'infusion 2, un bloc de chauffe 3 et un dispositif électronique de commande et de gestion des cycles de préparation des infusions, non représenté.
Le bloc d'infusion 2 comprend une chambre 20 d'infusion, en forme de cuve 23 cylindrique présentant un axe de symétrie vertical, destinée à recevoir une certaine quantité de mouture de café (c'est-à-dire de café moulu) en début de cycle de café. La chambre 20 comprend un débouché supérieur 21 d'introduction de la mouture. Un plateau expulseur, non représenté, est monté mobile, sous l'action d'une dispositif d'entraînement, entre une position inférieure de repos, dans laquelle il est situé dans un fond 22 de la cuve 23 et forme filtre pour la mouture, et une position supérieure d'expulsion, dans laquelle il est positionné au niveau du débouché supérieur 21 de manière à placer une galette de marc de café devant être évacuée en fin de cycle de café, sensiblement au niveau du débouché 21, juste au-dessus de celui-ci.
Le bloc de chauffe 3 est destiné à alimenter en eau chaude la chambre 20 d'infusion. Il est situé sous la chambre 20 d'infusion et, dans la forme de réalisation décrite ici, forme une seule pièce avec celle-ci. Le bloc de chauffe 3 comprend un circuit d'eau et un élément chauffant électrique non représentés, pouvant être réalisés comme décrit dans le document WO99/12456.

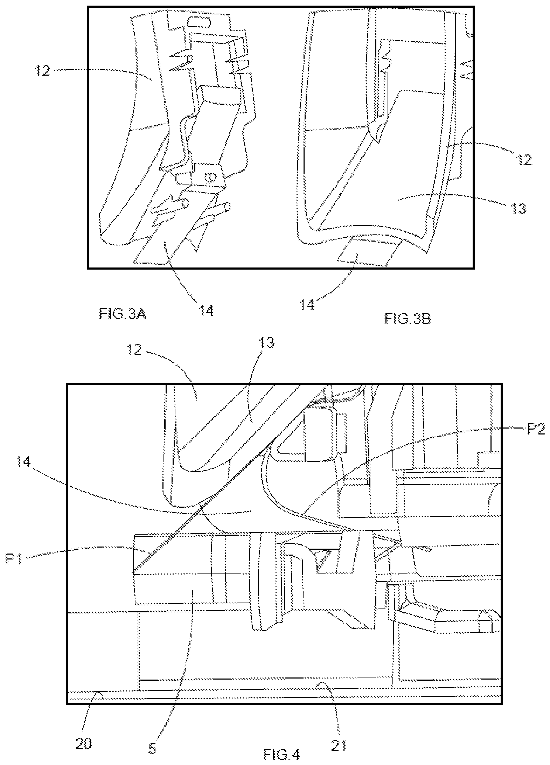

Le distributeur de mouture 1 comprend ici un broyeur 10, alimenté par un réservoir de grains de café non représenté. En variante, il pourrait comprendre un magasin de café moulu. Le broyeur 10 ménage un orifice 11 de distribution de café moulu communiquant avec le haut d'un conduit 12 d'amenée. Le conduit 12 est montée sur le bloc broyeur 10, le haut du conduit 12 étant positionné juste au-dessous de l'orifice 11 de distribution. Elle comprend une rampe d'écoulement 13, en forme de toboggan descendant vers la chambre 20 d'infusion.
Le conduit 12 est prolongé, à son extrémité basse, par une partie d'extrémité 14 libre flexible et élastique en forme de languette, ou de petite lame, ici rectangulaire.
Cette partie d'extrémité 14 est réalisée en un matériau souple et élastique, par exemple en matière plastique, en métal ou en élastomère, apte à être courbé sans se rompre sous l'action d'une force et à retrouver sa forme initiale au repos. Elle est fixée sous la rampe d'écoulement 13 par soudure par ultra-son.
En variante, la fixation de la partie d'extrémité 14 au conduit 12 pourrait être réalisée par vissage, coincement, collage ou toute autre technique de fixation adaptée. On soulignera que l'assemblage de la partie 14 et du conduit 12 est simple.
La partie d'extrémité 14 est mobile, par flexion, entre une position de repos étendue, ou déployée, et une position effacée fléchie. En position étendue, la partie d'extrémité 14 prolonge la rampe d'écoulement 13, formant ainsi rallonge pour le conduit 12, jusqu'au-dessus du débouché 21 de la chambre 20 d'infusion, de manière à déverser le café moulu sensiblement au centre de la cuve 23.
Plus précisément, en position de repos, ladite partie d'extrémité 14 comprend un bord d'extrémité libre s'étendant sensiblement au-dessus du centre de la chambre 20. Par « sensiblement au-dessus du centre de la chambre », on entend signifier que le bord d'extrémité libre de la partie 14 est positionné à une distance inférieure ou égale à 65% du rayon de la cuve cylindrique d'infusion de l'axe de symétrie centrale de la cuve 23. En position fléchie, la partie d'extrémité 14 est fléchie, rabattue sous la rampe d'écoulement 13, sous l'action d'une force de poussée comme cela sera explicité plus loin.
En fonctionnement, le café moulu sort du broyeur 10 par l'orifice 11, passe dans le conduit 12 et est conduit par la rampe d'écoulement 13 puis par la partie d'extrémité 14 jusqu'au-dessus du centre de la cuve 23 avant de se déverser dans la chambre 20 d'infusion, sensiblement au centre de celle-ci, par le débouché 21.
Le distributeur de boisson infusée comprend également une tête de tassage 4 et un organe d'éjection 5.
La tête de tassage 4 est destinée à tasser le café moulu introduit dans la chambre 20 d'infusion. Elle est mobile en translation verticale entre une position haute de repos située au-dessus de la chambre 20 d'infusion et une position basse de tassage, à l'intérieur de la chambre 20 d'infusion, dans laquelle la mouture est compactée. La tête de tassage 4 est adaptée pour coulisser de manière étanche dans la chambre 20. L'organe d'éjection 5 est destiné, en fin de cycle de café, à éjecter une galette de marc remontée au niveau du débouché 21 de la chambre 20 d'infusion par le plateau expulseur.
Avantageusement, il est mobile, par rotation autour d'un axe vertical, entre une position de repos et une position de départ avant éjection, que l'on appellera par la suite «position d'éjection». En fonctionnement, l'organe d'éjection 5 est animé d'un mouvement alternatif d'aller et de retour entre sa position de repos et sa position d'éjection. Le mouvement aller correspond au passage de la position de repos à la position d'éjection et, inversement, le mouvement retour au passage de la position d'éjection à la position de repos.
Un dispositif d'actionnement, non représenté, commande les mouvements de la tête de tassage 4 et de l'organe d'éjection 5, comme décrit plus loin dans la description d'un cycle de préparation d'un café. Ce dispositif d'actionnement peut être réalisé comme décrit dans le document FR2878721.
Nous allons à présent décrire un cycle de préparation d'un café.
Au démarrage d'un cycle de café, la tête de tassage 4 et l'organe d'éjection 5 sont en positions initiales de repos. La tête de tassage 4 est alors positionnée au-dessus de la chambre 20 d'infusion et l'organe d'éjection 5 est situé à gauche du débouché 21 sur la figure 1. Le cycle de café commence par l'introduction de mouture de café dans la chambre 20 d'infusion. A cet effet, le café moulu sort du broyeur 10 par l'orifice 11, passe dans le conduit 12 et s'écoule vers le bas le long de la rampe d'écoulement 13. En bas de la rampe 13, le café passe sur la partie d'extrémité 14 libre et se déverse dans la chambre 20 d'infusion par le débouché 21, et plus précisément par une zone centrale du débouche 21. Grâce à cela, la mouture de café est déversée au centre de la cuve 23. Le café est ainsi réparti de façon uniforme dans la chambre 20 d'infusion avant tassage et infusion.
Une fois la mouture de café introduite dans la chambre 20 d'infusion, la tête de tassage 4 descend verticalement de sa position supérieure de repos à sa position inférieure de tassage, à l'intérieur de la chambre 20.
En référence à la figure 1, lors du début de la descente de la tête de tassage 4, l'organe d'éjection 5 effectue un mouvement aller de pivotement entre sa position initiale de repos, à gauche du débouché 21 (figure 1), et sa position d'éjection, à droite du débouché 21 (figure 1).
Lors de son mouvement aller, l'organe d'éjection 5 pousse la partie d'extrémité 14 de manière à dégager le passage au-dessus du débouché 21 pour la descente de la tête de tassage 4 dans la chambre 20. La partie d'extrémité 14, initialement en position étendue de repos P1 au-dessus de la chambre 20, fléchit, se courbe, sous l'action de la force de poussée de l'organe d'éjection 5, et vient se rabattre sous le conduit 12 en position effacée et fléchie P2, comme représenté sur la figure 4. Ainsi, par flexion sous l'action de la poussée de l'organe d'éjection 5, la partie d'extrémité 14 s'efface en se déplaçant de sa position étendue de repos P1 à sa position effacée P2, fléchie sous le conduit 12.
L'organe d'éjection 5 et la partie d'extrémité 14 restent figés respectivement en position d'éjection et en position fléchie P2 sous le conduit 12, pendant la fin de la descente de la tête de tassage 4 et pendant la préparation du café.
En position de tassage, la tête de tassage 4 de tassage comprime la mouture introduite dans la cuve 23. Le café est ensuite fabriqué par introduction d'eau chaude sous pression dans la chambre 20, de façon connue. Le café préparé est conduit vers un récipient récepteur.
En fin de cycle de café, la tête de tassage 4 remonte de sa position de tassage à sa position de repos. De façon concomitante, le plateau expulseur remonte à l'intérieur de la chambre 20 sensiblement jusqu'au niveau du débouché 21, ce qui fait remonter la galette de marc (c'est-à-dire le café tassé et infusé en forme de galette) portée par le plateau. Dès que la galette de marc est au niveau du débouché 21 (juste au-dessus de celui-ci), l'organe d'éjection 5 pivote, dans un mouvement retour de balayage rapide, et passe de sa position d'éjection à sa position de repos. Cela a pour effet, d'une part, de pousser la galette de marc vers un bac de récupération et, d'autre part, de relâcher la partie d'extrémité 14 qui, par rappel élastique, revient en position étendue de repos au-dessus de la chambre 20.
On soulignera que, lors du retour en position de repos, l'effet ressort de la partie d'extrémité 14 permet son auto-nettoyage. En outre, la conception du dispositif d'amenée de la mouture en deux parties, l'une fixe comportant le conduit 12 et l'autre mobile comportant la partie 14, permet de réduire l'espace nécessaire à la cinématique du dispositif, notamment par rapport à un conduit intégralement mobile. La faible cinématique du dispositif réduit également le risque de blocage dans un environnement pollué par la mouture. De surcroît, même en cas de blocage de la partie d'extrémité 14 en position fléchie, la partie fixe constituée par le conduit 12 permet d'assurer la descente de la mouture dans la cuve 23. Le remplissage de la cuve 23 s'effectue dans ce cas dans un mode dégradé, avec une répartition moins uniforme de la mouture, mais le remplissage de la cuve 23 est néanmoins assuré.
Dans la description qui précède, la partie d'extrémité 14 du conduit 12 d'amenée est flexible et élastique et agencée pour être déplacée par flexion entre sa position de repos, dans laquelle elle prolonge le conduit 12 d'amenée jusqu'au-dessus du débouché 21 de la chambre 20, et sa position effacée, dans laquelle le dessus du débouché 21 est dégagé pour le passage de la tête de tassage 4. Dans une variante de réalisation, on pourrait envisager de déplacer la partie d'extrémité 14 de sa position de repos à sa position effacée par un autre type de mouvement, par exemple par pivotement ou par translation. Le retour en position de repos pourrait être assuré par tout moyen, par exemple par un moyen de rappel élastique.

## Revendications

1. Distributeur automatique de boisson infusée à partir d'une mouture comprenant :
• une chambre d'infusion (2) présentant un débouché (21) d'introduction de la mouture ;
• un conduit (12) d'amenée de la mouture jusqu'au débouché (21) de la chambre d'infusion (2);
• une tête de tassage (4) mobile entre une position de repos et une position de tassage à l'intérieur de la chambre (2);
le conduit (12) d'amenée étant prolongé par une partie d'extrémité (14) mobile entre une position de repos dans laquelle la partie d'extrémité prolonge le conduit (12) d'amenée jusqu'au-dessus du débouché (21) de la chambre d'infusion (2) et une position effacée dans laquelle le dessus du débouché (21) de la chambre d'infusion (2) est dégagé pour le passage de la tête de tassage (4), **caractérisé en ce que** la partie d'extrémité (14) est réalisée en un matériau souple et élastique, par exemple en matière plastique, en métal ou en élastomère, apte à être courbé sans se rompre sous l'action d'une force et à retrouver sa forme initiale au repos.

2. Distributeur selon la revendication 1, **caractérisé en ce que**, en position de repos, ladite partie d'extrémité (14) comprend un bord d'extrémité libre s'étendant sensiblement au-dessus du centre de la chambre (2).

3. Distributeur selon la revendication 1 ou 2, **caractérisé en ce que** la partie d'extrémité (14) est agencée pour passer de sa position de repos à sa position effacée par flexion sous l'action d'une force de poussée.

4. Distributeur selon la revendication 3, **caractérisé en ce que** la partie d'extrémité (14) est agencée pour revenir en position de repos après relâchement de la force de poussée.

5. Distributeur selon la revendication 4, **caractérisé en ce que** la partie d'extrémité (14) est agencée pour revenir en position de repos par rappel élastique.

6. Distributeur selon l'une des revendications précédentes, **caractérisé en ce qu'**il comprend un organe d'éjection (5) d'une galette de mouture en fin de cycle de préparation d'une infusion et **en ce que** ledit organe d'éjection (5) est agencé pour exercer une force de poussée sur la partie d'extrémité (14) du conduit (12) d'amenée afin de l'effacer.

7. Distributeur selon la revendication 6, **caractérisé en ce que**, ledit organe d'éjection (5) étant animé d'un mouvement alternatif d'aller et de retour entre une position de repos et une position d'éjection, il est agencé pour exercer une force de poussée sur la partie d'extrémité (14) lors de son mouvement aller de la position de repos à la position d'éjection et pour relâcher la partie d'extrémité (14) lors de son mouvement retour de la position d'éjection à la position de repos.

8. Distributeur selon l'une des revendications précédentes, **caractérisé en ce que** la partie d'extrémité (14) est fixée sous le conduit (12) d'amenée.

9. Distributeur selon la revendication précédente, **caractérisé en ce que** la partie d'extrémité (14) est fixée par l'une des techniques du groupe comprenant soudure par ultra-son, vissage, coincement et collage.

10. Distributeur selon l'une des revendications précédentes, **caractérisé en ce que** la partie d'extrémité (14) est agencée pour être placée sous le conduit (12) d'amenée en position effacée.

11. Distributeur selon l'une des revendications précédentes, **caractérisé en ce que** la partie d'extrémité (14) est réalisée dans l'un des matériaux du groupe comprenant une matière plastique, un métal et un élastomère.

12. Distributeur selon l'une des revendications précédentes, **caractérisé en ce que** la partie d'extrémité (14) a une forme de languette.

13. Distributeur selon l'une des revendications 6 ou 7, **caractérisé en ce que** l'organe d'éjection (5) est mobile en rotation autour d'un axe vertical.

14. Machine automatique à café intégrant un distributeur selon l'une des revendications précédentes.

## Patentansprüche

1. Automatischer Spender für Aufgussgetränke ausgehend von Mahlgut, umfassend:
- eine Aufgusskammer (2), die eine Mündung (21) zur Einführung von Mahlgut aufweist;
- eine Leitung (12) zur Zuführung von Mahlgut bis zu der Mündung (21) der Aufgusskammer (2);
- einen Stampfkopf (4), der zwischen einer Ruheposition und einer Stampfposition im Inneren der Kammer (2) beweglich ist;
wobei die Leitung (12) zur Zuführung durch einen Endabschnitt (14) verlängert ist, der zwischen einer Ruheposition, in der der Endabschnitt die Leitung (12) zur Zuführung bis oberhalb der Mündung (21) der Aufgusskammer (2) verlängert, und einer eingezogenen Position, in der das obere Ende der Mündung (21) der Aufgusskammer (2) für den Durchgang des Stampfkopfes (4) gelöst ist, beweglich ist, **dadurch gekennzeichnet, dass** der Endabschnitt (14) aus einem flexiblen und elastischen Material, beispielsweise aus Kunststoffmaterial, aus Metall oder aus Elastomer, realisiert ist, das angepasst ist, gebogen zu werden, ohne unter der Einwirkung einer Kraft zu brechen und in seine anfängliche Form im Ruhezustand zurückzukehren.

2. Spender nach Anspruch 1, **dadurch gekennzeichnet, dass** in der Ruheposition der Endabschnitt (14) eine freie Endkante umfasst, die sich im Wesentlichen über dem Zentrum der Kammer (2) erstreckt.

3. Spender nach Anspruch 1 oder 2, **dadurch gekennzeichnet, dass** der Endabschnitt (14) eingerichtet ist, sich von seiner Ruheposition in seine eingezogene Position durch eine Biegung unter der Einwirkung einer Vorschubkraft zu bewegen.

4. Spender nach Anspruch 3, **dadurch gekennzeichnet, dass** der Endabschnitt (14) eingerichtet ist, in die Ruheposition nach der Entspannung der Vorschubkraft zurückzukehren.

5. Spender nach Anspruch 4, **dadurch gekennzeichnet, dass** der Endabschnitt (14) eingerichtet ist, in die Ruheposition durch eine elastische Rückstellung zurückzukehren.

6. Spender nach einem der vorhergehenden Ansprüche, **dadurch gekennzeichnet, dass** er ein Element zum Auswerfen (5) von einem Mahlgutkuchen am Ende des Zyklus zur Zubereitung eines Aufgusses umfasst, und dass das Element zum Auswerfen ( 5) eingerichtet ist, eine Vorschubkraft auf den Endabschnitt (14) der Leitung (12) zur Zuführung auszuüben, um ihn einzuziehen.

7. Spender nach Anspruch 6, **dadurch gekennzeichnet, dass** das Element zum Auswerfen (5) zu einer alternierenden Hin- und Rückbewegung zwischen einer Ruheposition und einer Auswurfposition angetrieben wird, wobei es eingerichtet ist, eine Vorschubkraft auf den Endabschnitt (14) während seiner Hinbewegung aus der Ruheposition in die Auswurfposition auszuüben und den Endabschnitt (14) während seiner Rückbewegung aus der Auswurfposition in der Ruheposition freizugeben.

8. Spender nach einem der vorhergehenden Ansprüche, **dadurch gekennzeichnet, dass** der Endabschnitt (14) unter der Leitung (12) zur Zuführung angebracht ist.

9. Spender nach dem vorhergehenden Anspruch, **dadurch gekennzeichnet, dass** der Endabschnitt (14) durch eine der Techniken aus der Gruppe fixiert ist, die das Ultraschallschweißen, das Schrauben, das Klemmen und das Kleben umfasst.

10. Spender nach einem der vorhergehenden Ansprüche, **dadurch gekennzeichnet, dass** der Endabschnitt (14) eingerichtet ist, unter der Leitung (12) zur Zuführung in der eingezogenen Position platziert zu werden.

11. Spender nach einem der vorhergehenden Ansprüche, **dadurch gekennzeichnet, dass** der Endabschnitt (14) aus einem der Materialien der Gruppe realisiert ist, die ein Kunststoffmaterial, ein Metall und ein Elastomer umfasst.

12. Spender nach einem der vorhergehenden Ansprüche, **dadurch gekennzeichnet, dass** der Endabschnitt (14) eine Zungenform hat.

13. Spender nach einem der Ansprüche 6 oder 7, **dadurch gekennzeichnet, dass** das Element zum Auswerfen (5) um eine vertikale Achse drehbar ist.

14. Automatische Kaffeemaschine, in der ein Spender nach einem der vorhergehenden Ansprüche integriert ist.

## Claims

1. Automatic dispenser for beverages infused using grounds, comprising:
- an infusion chamber (2) having an outlet (21) for introducing grounds;
- a supply duct (12) for supplying the grounds to the outlet (21) of the infusion chamber (2);
- a compacting head (4) that is able to move between a rest position and a compacting position inside the chamber (2);
the supply duct (12) being extended by an end part (14) that is able to move between a rest position in which the end part extends the supply duct (12) until it is above the outlet (21) of the infusion chamber (2) and a retracted position in which the top of the outlet (21) of the infusion chamber (2) is freed for the passage of the compacting head (4), **characterised in that** the end part (14) is made of a flexible and elastic material, for example a plastic material, a metal or an elastomer, capable of being bent without breaking under the effect of a force and of recovering its initial shape when at rest.

2. Dispenser according to claim 1, **characterised in that**, in the rest position, said end part (14) comprises a free end edge extending substantially above the centre of the chamber (2).

3. Dispenser according to claim 1 or claim 2, **characterised in that** the end part (14) is arranged such that it moves from its rest position to its retracted position by bending under the effect of a propelling force.

4. Dispenser according to claim 3, **characterised in that** the end part (14) is arranged such that it returns to its rest position after relaxation of the propelling force.

5. Dispenser according to claim 4, **characterised in that** the end part (14) is arranged such that it returns to the rest position under an elastic return force.

6. Dispenser according to one of the previous claims, **characterised in that** it comprises an ejecting member (5) for ejecting a cake of grounds at the end of the infusion preparation cycle and **in that** said ejection member (5) is arranged such that it exerts a propelling force on the end part (14) of the supply duct (12) in order to retract same.

7. Dispenser according to claim 6, **characterised in that**, whereby said ejection member (5) moves by an alternating to-and-fro movement between a rest position and an ejection position, it is arranged such that it exerts a propelling force on the end part (14) during the forwards movement thereof from the rest position to the ejection position and such that it releases the end part (14) during the return movement thereof from the ejection position to the rest position.

8. Dispenser according to one of the previous claims, **characterised in that** the end part (14) is secured beneath the supply duct (12).

9. Dispenser according to the previous claim, **characterised in that** the end part (14) is secured by one of the methods in the group including ultrasonic bonding, screwing, wedging and bonding.

10. Dispenser according to one of the previous claims, **characterised in that** the end part (14) is arranged such that it is placed beneath the supply duct (12) in the retracted position.

11. Dispenser according to one of the previous claims, **characterised in that** the end part (14) is made of one of the materials in the group including a plastic material, a metal and an elastomer.

12. Dispenser according to one of the previous claims, **characterised in that** the end part (14) has the shape of a lug.

13. Dispenser according to one of claims 6 or claim 7, **characterised in that** the ejection member (5) is able to move in rotation about a vertical axis.

14. Automatic coffee machine integrating a dispenser according to one of the previous claims.
